# EUROPEAN PATENT APPLICATION

(11) **EP 1 628 100 A2**
(43) Date of publication of application: **22.02.2006**
(21) Application number: 05001038.8
(22) Date of filing: 19.01.2005
(51) Int. Cl.: F25B 27/02, F02G 5/04

(54) **Cogeneration system and exhaust gas heat exchanger assembly thereof**

(30) Priority: 17.08.2004 KR 2004064812
(71) Applicant: LG ELECTRONICS INC., Seoul 150-010 (KR)
(72) Inventor: Kim, Cheol Min, Manan-ku Anyang-si Kyungki-do 430-042 (KR); Ko, Cheol Soo, Kyungki-do 435-040 (KR); Ha, Sim Bok, Seoul 153-023 (KR); Chung, Baik Young, jong-do Kyeyang-ku Inchun-si 407-710 (KR)
(74) Representative: TER MEER - STEINMEISTER & PARTNER GbR

(57) **Abstract**

An exhaust gas heat exchanger assembly of a cogeneration system including exhaust tubes (93), (96), through which exhaust gas discharged from an engine (50) passes, a muffler (91) arranged between the exhaust tubes (93), (96) to reduce exhaust noise, and a first exhaust gas heat exchanger (92) and a second exhaust gas heat exchanger (95) respectively arranged at opposite sides of the muffler (91) to perform heat exchange with the exhaust gas passing through the exhaust tubes (93), (96). In accordance with the exhaust gas heat exchanger assembly, it is possible to reduce exhaust noise, and thus, to achieve a more quiet system operation. In addition, the heat exchangers (92), (95) are arranged in a compact state, so that it is possible to reduce the volume of the cogeneration system and to enhance the utility of the cogeneration system.

## Description

### BACKGROUND OF THE INVENTION

### Field of the Invention

The present invention relates to a cogeneration system in which both the electricity and waste heat generated from an engine are used, and, more particularly, to a cogeneration system in which a pair of exhaust gas heat exchangers and a muffler are integrated, thereby achieving an enhancement in heat exchanging efficiency and a great reduction in noise.

### Description of the Related Art

In general, cogeneration systems are adapted to generate both electricity and heat from a single energy source.

Such a cogeneration system can recover heat of exhaust gas or waste heat of cooling water generated from an engine or turbine during an electricity generation operation, so that the cogeneration system can achieve an increase in energy efficiency of 70 to 80% over other systems. By virtue of such an advantage, the cogeneration system has recently been highlighted as an electricity and heat supply source for buildings. In particular, the cogeneration system exhibits highly-efficient energy utilization in that the recovered waste heat is mainly used to heat/cool a confined space and to heat water.

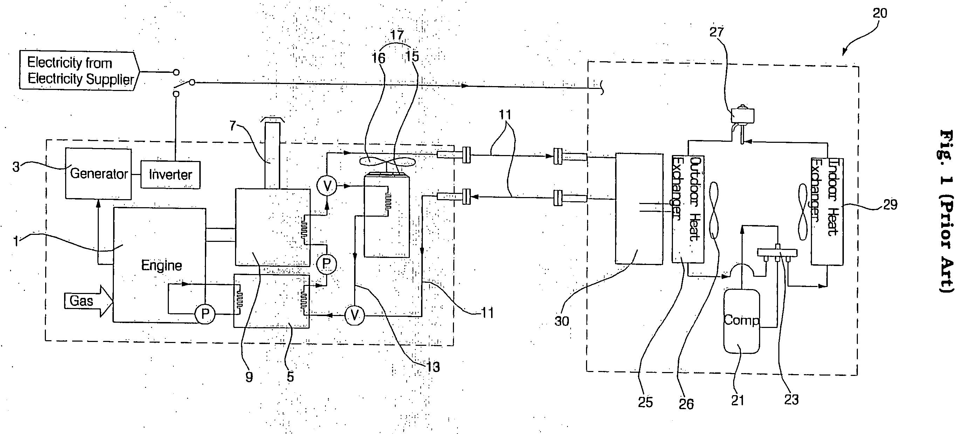

FIG. 1 is a schematic configuration diagram illustrating a conventional cogeneration system used in a heating/cooling apparatus.

As shown in FIG. 1, the conventional cogeneration system includes a gas engine 1, and a generator 3, which is driven by a driving force outputted from the gas engine 1, to generate electricity. The electricity generated from the generator 3 is used in a variety of devices including a cooling/heating unit 20, illumination devices, and other electrical products.

In the cogeneration system, waste heat generated from the gas engine 1, that is, heat of cooling water generated when the cooling water cools the gas engine 1, and heat of exhaust gas generated from the gas engine 1, is used during a heating operation of the cooling/heating unit 20.

Here, the cooling/heating unit 20 is of a heat pump type so that the cooling/heating unit 20 not only can be used as a cooling unit, but also can be used as a heating unit in a state in which the refrigerant flow direction in the refrigerant cycle is reversed. As in a general heat pump type configuration, the cooling/heating unit 20 includes a compressor 21, a four-way valve 23, an outdoor heat exchanger 25, an outdoor fan 26, an expansion device 27, and an indoor heat exchanger 29.

In particular, an air pre-heating heat exchanger 30 is arranged at the side of the outdoor heat exchanger 25 to preheat air passing around the outdoor heat exchanger 25 during a heating operation of the cooling/heating unit 20, using the waste heat of the gas engine 1.

In order to supply the waste heat to the cooling/heating unit 20, the cogeneration system also includes a cooling water heat exchanger 5 to recover the heat of the cooling water used to cool the gas engine 1, and an exhaust gas heat exchanger 9 arranged at an exhaust conduit 7 to recover the heat of the exhaust gas.

The cooling water heat exchanger 5 and exhaust gas heat exchanger 9 are connected to the air pre-heating heat exchanger 30 of the cooling/heating unit 20 by a heat transfer line 11, through which a heat transfer medium flows, so as to supply waste heat to the air pre-heating heat exchanger 30 during the heating operation of the cooling/heating unit 20. Thus, the cogeneration system recovers engine heat and exhaust gas heat, pre-heats outdoor air through the air pre-heating heat exchanger 30, using the recovered heat, and causes the pre-heated air to perform heat exchange with the outdoor heat exchanger 25, thereby preventing a degradation in the heating performance of the cooling/heating unit 20, which may occur when the temperature of the outdoor air is low.

When the cooling/heating unit 20 operates in a cooling mode, the flow path of the heat transfer medium is changed to communicate with a radiating line 13, which is connected to the heat transfer line 11, because it is unnecessary to supply waste heat. In this case, the waste heat is discharged to the atmosphere through a radiator 17, which includes a heat exchanger 15 and a radiator fan 16, or is supplied to and used in a water heater, a hot water supplier, or other systems.

In FIG. 1, reference character P designates pumps, each serving to force the heat transfer medium to flow through an associated portion of the heat transfer line 11, and reference character V designates valves, each serving to switch the flow path of the heat transfer medium between the heat transfer line 11 and the radiating line 13.

However, since the waste heat generated from the gas engine 1 is used only to pre-heat the outdoor heat exchanger 25 through the air pre-heating heat exchanger 30, the conventional cogeneration system has a limitation in enhancing the heating performance during the heating operation.

### SUMMARY OF THE INVENTION

The present invention has been made in view of the above-mentioned problem, and it is an object of the invention to provide a cogeneration system in which a pair of heat exchangers and a muffler are integrally arranged at an exhaust conduit, thereby achieving sequential heat exchange of exhaust gas while effectively reducing exhaust noise.

In accordance with one aspect, the present invention provides an exhaust gas heat exchanger assembly of a cogeneration system comprising: exhaust tubes, through which exhaust gas discharged from an engine passes; a muffler arranged between the exhaust tubes, to reduce exhaust noise; and a first exhaust gas heat exchanger and a second exhaust gas heat exchanger respectively arranged at opposite sides of the muffler to perform heat exchange with the exhaust gas passing through the exhaust tubes.

Each of the exhaust tubes comprises a bundle of tubes arranged in an associated one of the first and second exhaust gas heat exchangers, and connected to the muffler.

The muffler may comprise a muffler body, and at least one noise reducing member arranged in the muffler body to reduce noise.

A flange may be provided at an inlet of one of the exhaust tubes corresponding to an inlet of the exhaust gas heat exchanger assembly.

The cogeneration system may comprise a cooling/heating unit, which comprises at least one compressor, a four-way valve, an outdoor heat exchanger, an expansion device, and an indoor heat exchanger, to establish a heat pump type refrigerant cycle. The first exhaust gas heat exchanger may be arranged to pre-heat air passing around the outdoor heat exchanger. The second exhaust gas heat exchanger may be arranged to heat a refrigerant passing through an inlet of the indoor heat exchanger.

In accordance with another aspect, the present invention provides an exhaust gas heat exchanger assembly of a cogeneration system comprising: exhaust tubes, through which exhaust gas discharged from an engine passes; a muffler arranged between the exhaust tubes to reduce exhaust noise; a first exhaust gas heat exchanger arranged upstream from the muffler to perform heat exchange with exhaust gas heat of a relatively high temperature; and a second exhaust gas heat exchanger arranged downstream from the muffler to perform heat exchange with exhaust gas heat of a relatively low temperature.

In accordance with another aspect, the present invention provides a cogeneration system comprising: an engine, which drives a generator to generate electricity; a cooling/heating unit, which comprises at least one compressor, a four-way valve, an outdoor heat exchanger, an expansion device, and an indoor heat exchanger, to establish a heat pump type refrigerant cycle; exhaust tubes, through which exhaust gas discharged from an engine passes; a muffler arranged between the exhaust tubes to reduce exhaust noise; a first exhaust gas heat exchanger arranged upstream from the muffler to recover exhaust gas heat of a relatively high temperature, and thus, to preheat air passing around the outdoor heat exchanger; and a second exhaust gas heat exchanger arranged downstream from the muffler to recover exhaust gas heat of a relatively low temperature, and thus, to supply the recovered heat to an inlet of the indoor heat exchanger.

In the cogeneration system of the present invention and the exhaust gas heat exchanger assembly thereof, the heat exchangers are arranged at opposite sides of the muffler in the exhaust conduit of the engine such that the heat exchangers and muffler are integrated. Accordingly, it is possible to reduce exhaust noise, and thus, to achieve a more quiet system operation. In addition, the heat exchangers are arranged in a compact state, so that it is possible to reduce the volume of the cogeneration system and to enhance the utility of the cogeneration system.

### BRIEF DESCRIPTION OF THE DRAWINGS

The above objects, and other features and advantages of the present invention will become more apparent after reading the following detailed description when taken in conjunction with the drawings, in which:
FIG. 1 is a schematic configuration diagram illustrating a conventional cogeneration system;
FIG. 2 is a schematic configuration diagram illustrating a cogeneration system according to an exemplary embodiment of the present invention; and
FIG. 3 is a schematic configuration diagram illustrating an internal structure of the exhaust gas heat exchanger assembly of the cogeneration system according to the illustrated embodiment of the present invention.

### DESCRIPTION OF THE PREFERRED EMBODIMENTS

Hereinafter, exemplary embodiments of a cogeneration system and an exhaust gas heat exchanger assembly thereof according to the present invention will be described with reference to the annexed drawings.

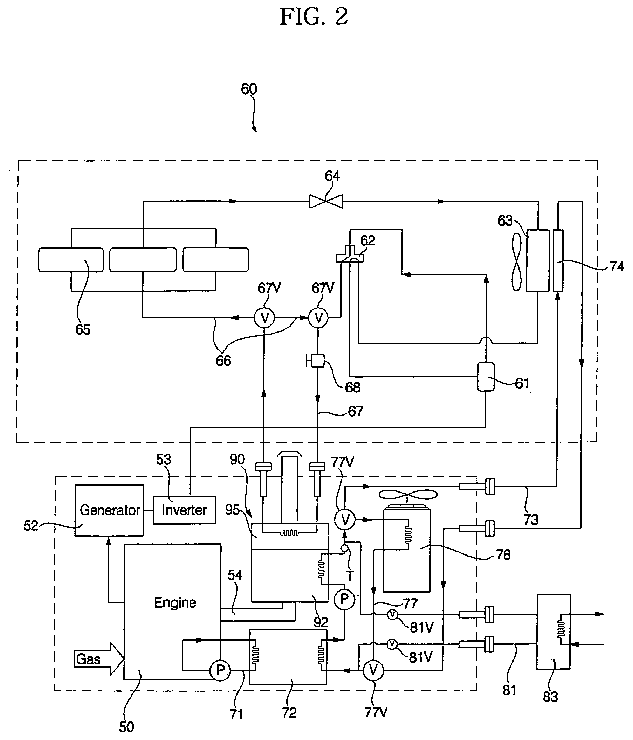

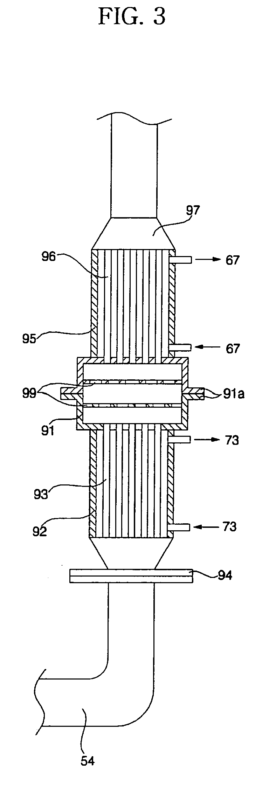

FIG. 2 is a schematic configuration diagram illustrating a cogeneration system including an exhaust gas heat exchanger assembly according to an exemplary embodiment of the present invention. FIG. 3 is a schematic configuration diagram illustrating an internal structure of the exhaust gas heat exchanger assembly of the cogeneration system according to the illustrated embodiment of the present invention.

As shown in FIG. 2, the cogeneration system includes an engine 50, which operates using fossil fuel such as natural gas or petroleum gas, a generator 52 and an inverter 53 to generate electricity, using a driving force of the engine 50, first and second exhaust gas heat exchangers 92 and 95 arranged at an exhaust conduit 54 to recover heat of exhaust gas of the engine 50, a cooling water heat exchanger 72 to recover heat of cooling water of the engine 50, and a radiating heat exchanger 78 to radiate the cooling water heat.

The cogeneration system also includes a cooling/heating unit 60, which uses a heat pump type refrigerant cycle using waste heat generated from the engine 50. The cooling/heating unit 60 includes at least one compressor 61, a four-way valve 62, an outdoor heat exchanger 63, an expansion device 64, and an indoor heat exchanger 65, as in a general heat pump type cooling/heating unit, which can be used as both a cooling unit and a heating unit in accordance with reversal of a refrigerant flow in a refrigerant cycle of the cooling/heating unit.

Fans (not shown), which are provided in association with the compressor 61, outdoor heat exchanger 63, and indoor heat exchanger 65, respectively, may be driven by the electricity supplied from the generator 52.

In particular, an exhaust gas heat exchanger assembly 90 is arranged at the exhaust conduit 54, through which the exhaust gas of the engine 50 is discharged, as shown in FIG. 3.

The exhaust gas heat exchanger assembly 90 includes a muffler 91 arranged at an intermediate portion of the exhaust conduit 54 to reduce exhaust noise, and exhaust tubes 93 and 96 respectively arranged at apposite sides of the muffler 91 to connect the muffler 91 to the exhaust conduit 54 such that the exhaust gas in the exhaust conduit 54 passes through the muffler 91. The first and second exhaust gas heat exchangers 92 and 95 are also included in the exhaust gas heat exchanger assembly 90. The first and second exhaust gas heat exchangers 92 and 95 are arranged at the opposite sides of the muffler 91 to perform heat exchange with the exhaust gas passing through the exhaust tubes 93 and 96, respectively.

Each of the exhaust tubes 93 and 96 has a tube bundle structure to obtain an increased heat transfer rate in the interior of an associated one of the first and second exhaust gas heat exchangers 92 and 95.

A flange 94 is provided at an inlet of the exhaust tube 93 corresponding to an upstream end of the first exhaust gas exchanger 92 so that the exhaust tube 93 and first exhaust gas exchanger 92 are coupled to the exhaust conduit 54 by means of the flange 94. Also, a connector 97 is provided at an outlet of the exhaust tube 96 corresponding to a downstream end of the second exhaust gas exchanger 95 so that the exhaust tube 96 and second exhaust gas exchanger 95 are coupled to the exhaust conduit 54 by means of the connector 97.

In order to reduce noise generated during discharge of exhaust gas, the muffler 91 has a structure in which the interior of the muffler 91 is divided into a plurality of chambers by a plurality of membranes while being communicated with one another to define an elongated exhaust gas path, as in a general muffler structure. The muffler 91 includes two muffler cases provided, at facing ends thereof, with flanges 91a, and coupled to each other by means of the flanges 91a.

In the case illustrated in FIG. 3, the muffler 91 includes one or more noise reducing members 99 each arranged in an associated one of the muffler cases and made of a mesh member having a porous structure. Although only the mesh members are used for the noise reducing members 99 in the case of FIG. 3, noise absorbing members (not shown) may also be provided, in addition to the mesh members.

The first exhaust gas heat exchanger 92 is arranged upstream from the second exhaust gas heat exchanger 95 with respect to a flowing direction of the exhaust gas, to recover heat of a relatively high temperature. In this case, the second exhaust gas heat exchanger 95, which is arranged downstream from the first exhaust gas heat exchanger 92, recovers heat of a relatively low temperature.

It is preferred that the exhaust gas heat exchangers 92 and 95 be designed to withstand an exhaust gas pressure of 600 mmAq or below. Also, the first exhaust gas heat exchanger 92 must be designed such that the outlet exhaust gas temperature thereof ranges from 130°C to 150°C. In this case, the second exhaust gas heat exchanger 95 can effectively perform heat exchange with a refrigerant passing through the second exhaust gas heat exchanger 95, and thus, can discharge exhaust gas maintained at a temperature of 100°C or below.

The cogeneration system also includes a pre-heat supplying means to supply the heat of cooling water used to cool the engine 50 and the heat of exhaust gas discharged from the engine 50 to the outdoor heat exchanger 63, and thus, to pre-heat air passing around the outdoor heat exchanger 63. The cooling water heat exchanger 72 is included in the pre-heat supplying means. The cooling water heat exchanger 72 is connected to the engine 50 via a cooling water line 71 to recover the cooling water heat of the engine 50. The first exhaust gas heat exchanger 92, which primarily recovers the heat of the exhaust gas discharged from the engine 50, is also included in the pre-heat supplying means. The pre-heat supplying means further includes a pre-heating heat exchanger 74 to pre-heat the outdoor heat exchanger 63, and a heat transfer line 73, which connects the cooling water heat exchanger 72, first exhaust gas heat exchanger 92, and pre-heating heat exchanger 74, to guide a heat transfer medium to pass through the exchangers 72, 92, and 74.

A temperature sensor T is arranged at the heat transfer line 73 to sense the temperature of the heat transfer medium at an outlet of the first exhaust gas heat exchanger 92.

A radiating means is also arranged at the heat transfer line 73 to radiate heat transferred from the cooling water heat exchanger 72 and first exhaust gas heat exchanger 92. The radiating means includes a radiating line 77 branched from the heat transfer line 73, valves 77v to change a fluid path between the heat transfer line 73 and the radiating line 77, and a radiating heat exchanger 78, through which the radiating line 77 extends to radiate heat.

An external heat exchanger 83 is connected to the heat transfer line 73 via an external line 81 to receive the heat transferred from the cooling water heat exchanger 72 and first exhaust gas heat exchanger 92, and thus, to supply a heat source to an external system for hot water supply or other purposes.

In accordance with the present invention, the cogeneration system further includes a refrigerant over-heating means to supply the heat of the exhaust gas discharged from the engine 50 to an inlet of the indoor heat exchanger 65 of the cooling/heating unit 60. The refrigerant over-heating means includes a heating line 67 branched from a refrigerant line 66 between the indoor heat exchanger 65 and the four-way valve 62, and valves 67v to change a refrigerant path between the refrigerant line 66 and the heating line 67. The refrigerant over-heating means also includes the second exhaust gas heat exchanger 95, which is arranged at the exhaust conduit 54 of the engine 50. The heating line 67 extends through the second exhaust gas heat exchanger 95, and performs heat exchange with the second exhaust gas heat exchanger 95.

A flow rate control valve 68 is arranged at the heating line 67 to control the flow rate of the refrigerant flowing through the second exhaust gas heat exchanger 95.

In FIG. 2, reference character P designates pumps, each serving to force the heat transfer medium to flow through an associated line.

Although the arrangement, in which a plurality of indoor heat exchangers 65 are connected to the single compressor 61, has been illustrated in FIG. 2, a plurality of compressors 61 or a plurality of outdoor heat exchangers 63 may be used. Also, although the cogeneration system has been illustrated as including one engine 50 and one cooling/heat unit 60, a plurality of cooling/heating units or a plurality of engine rooms may be used.

Of course, where a plurality of cooling/heating units or a plurality of engine rooms are used, they are connected in serial or in parallel to the refrigerant line or heat transfer line through distributors.

Meanwhile, the above-described heat exchangers may have various heat transfer configurations, for example, a heat transfer configuration in which heat transfer is carried out through a thermal conductor, or a heat transfer configuration in which heat transfer is carried out through a fluid present in a heat exchanger, in accordance with the given design condition or the given requirement.

Hereinafter, operation of the cogeneration system according to the present invention will be described.

Electricity, which is generated by a driving force from the engine 50, may be used to operate electricity consuming elements such as the compressor 61 of the cooling/heating unit 60 and diverse controllers.

During a heating operation of the cooling/heating unit 60, a refrigerant flows through the compressor 61, four-way valve 62, indoor heat exchanger 65, expansion device 64, and outdoor heat exchanger 63, in this order, to perform a heating operation. In this case, the cooling water heat and exhaust gas heat of the engine 50 are transferred to the pre-heating heat exchanger 74 via the cooling water heat exchanger 72 and first exhaust gas heat exchanger 92, so that the outdoor heat exchanger 63 is pre-heated. Accordingly, it is possible to prevent the heat exchanging performance of the outdoor heat exchanger 63 serving as an evaporator from being greatly degraded under the condition in which the ambient temperature is considerably low. Thus, an enhancement in heating performance is achieved.

Also, the refrigerant, which is introduced into the indoor heat exchanger 65 via the second exhaust gas heat exchanger 95, is heated by the secondary exhaust gas heat. Accordingly, it is possible to enhance the heating performance of the indoor heat exchanger 65 serving as a condenser to heat a confined space.

When a heating overload is generated, or the load to be heated is small, the flow rate of the refrigerant is appropriately controlled, using the valves 67v and flow rate control valve 68. Also, the temperature of the heat transfer medium transferred to the pre-heating heat exchanger 74 is appropriately controlled by sensing the temperature of the heat transfer medium by the temperature sensor T, and changing the communication paths of the valves 77v and valves 81v respectively associated with the radiating heat exchanger 78 and external heat exchanger 83, based on the sensed temperature.

Meanwhile, when heating of water is required, the valves 81v, which are arranged at the external line 81, are opened to transfer heat to the external heat exchanger 83 via the external line 81, and thus, to enable the external heat exchanger 83 to heat water.

In a cooling operation of the cooling/heating unit 60, the refrigerant flows through the compressor 61, four-way valve 62, outdoor heat exchanger 63, expansion device 64, indoor heat exchanger 65, four-way valve 62, and compressor 61, in this order, to perform the cooling operation.

In this case, the heat transferred from the cooling water heat exchanger 72 and first exhaust gas heat exchanger 92 to the pre-heating heat exchanger 74 is cut off. Also, the engine cooling water heat and exhaust gas heat are radiated through the radiating heat exchanger 78 and external heat exchanger 83. The communication paths of the valves 67v are also changed to prevent the refrigerant from flowing from the refrigerant line 66 between the indoor heat exchanger 65 and the four-way valve 62 to the bypass line 67 communicating with the second exhaust gas heat exchanger 95.

Meanwhile, since the exhaust gas heat exchanger assembly 90 is configured such that the first and second exhaust gas heat exchangers 92 are arranged in serial, and the muffler 91 is arranged between the first and second exhaust gas heat exchangers 92, it is possible to reduce noise generated during discharge of the exhaust gas, and to obtain a more compact heat exchanger arrangement.

As apparent from the above description, the cogeneration system of the present invention includes an exhaust gas heat exchanger assembly in which a pair of heat exchangers are arranged at opposite sides of a muffler in an exhaust conduit of an engine such that the heat exchangers and muffler are integrated. Accordingly, it is possible to reduce exhaust noise, and thus, to achieve a more quiet system operation. In addition, the heat exchangers are arranged in a compact state, so that it is possible to reduce the volume of the cogeneration system and to enhance the utility of the cogeneration system.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. An exhaust gas heat exchanger assembly of a cogeneration system comprising:
exhaust tubes (93), (96), through which exhaust gas discharged from an engine (50) passes;
a muffler (91) arranged between the exhaust tubes (93), (96) to reduce exhaust noise; and
a first exhaust gas heat exchanger (92) and a second exhaust gas heat exchanger (95) respectively arranged at opposite sides of the muffler (91) to perform heat exchange with the exhaust gas passing through the exhaust tubes (93), (96).

2. The exhaust gas heat exchanger assembly according to claim 1, wherein each of the exhaust tubes (93), (96) comprises a bundle of tubes arranged in an associated one of the first and second exhaust gas heat exchangers (92), (95), and connected to the muffler (91).

3. The exhaust gas heat exchanger assembly according to claim 1, wherein the muffler (91) comprises:
a muffler body; and
at least one noise reducing member (99) arranged in the muffler body to reduce noise.

4. The exhaust gas heat exchanger assembly according to claim 1, wherein a flange (94) is provided at an inlet of one of the exhaust tubes (93), (96) corresponding to an inlet of the exhaust gas heat exchanger assembly.

5. The exhaust gas heat exchanger assembly according to claim 1, wherein:
the cogeneration system comprises a cooling/heating unit (60), which comprises at least one compressor (61), a four-way valve (62), an outdoor heat exchanger (63), an expansion device (64), and an indoor heat exchanger (65), to establish a heat pump type refrigerant cycle;
the first exhaust gas heat exchanger (92) is arranged to pre-heat air passing around the outdoor heat exchanger (63); and
the second exhaust gas heat exchanger (95) is arranged to heat a refrigerant passing through an inlet of the indoor heat exchanger (65).

6. The exhaust gas heat exchanger assembly according to claim 5, wherein each of the exhaust tubes (93), (96) comprises a bundle of tubes arranged in an associated one of the first and second exhaust gas heat exchangers (92), (95), and connected to the muffler (91).

7. The exhaust gas heat exchanger assembly according to claim 5, wherein the muffler (91) comprises:
a muffler body; and
at least one noise reducing member (99) arranged in the muffler body to reduce noise.

8. The exhaust gas heat exchanger assembly according to claim 5, wherein a flange (94) is provided at an inlet of one of the exhaust tubes (93), (96) corresponding to an inlet of the exhaust gas heat exchanger assembly.

9. A cogeneration system comprising:
an engine (50), which drives a generator (52) to generate electricity;
a cooling/heating unit (60), which comprises at least one compressor (61), a four-way valve (62), an outdoor heat exchanger (63), an expansion device (64), and an indoor heat exchanger (65), to establish a heat pump type refrigerant cycle;
exhaust tubes (93), (96), through which exhaust gas discharged from an engine (50) passes;
a muffler (91) arranged between the exhaust tubes (93), (96) to reduce exhaust noise;
a first exhaust gas heat exchanger (92) arranged upstream from the muffler (91) to recover exhaust gas heat of a relatively high temperature, and thus, to preheat air passing around the outdoor heat exchanger (63); and
a second exhaust gas heat exchanger (95) arranged downstream from the muffler (91) to recover exhaust gas heat of a relatively low temperature, and thus, to supply the recovered heat to an inlet of the indoor heat exchanger (65).

10. The cogeneration system according to claim 9, wherein each of the exhaust tubes (93), (96) comprises a bundle of tubes arranged in an associated one of the first and second exhaust gas heat exchangers (92), (95), and connected to the muffler (91).
